(19) **Europäisches Patentamt**
**European Patent Office**
**Office européen des brevets**

(11) **EP 4 672 751 A1**

(12) **EUROPEAN PATENT APPLICATION**

(43) Date of publication:
**31.12.2025 Bulletin 2026/01**

(21) Application number: **24306041.5**

(22) Date of filing: **28.06.2024**

(51) International Patent Classification (IPC):
**H04N 19/18** (2014.01)    **G06T 9/00** (2006.01)
**H04N 19/597** (2014.01)    **H04N 19/96** (2014.01)
**H04N 19/60** (2014.01)

(52) Cooperative Patent Classification (CPC):
**H04N 19/18; G06T 9/001; G06T 9/005;
G06T 9/007; H04N 19/597; H04N 19/60;
H04N 19/96**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
- **SANDRI, Gustavo**
  **35510 CESSON-SEVIGNE (FR)**
- **THUDOR, Franck**
  **35000 RENNES (FR)**
- **CHUPEAU, Bertrand**
  **35700 RENNES (FR)**
- **SABATER, Neus**
  **35830 BETTON (FR)**

(74) Representative: **Vossius & Partner
Patentanwälte Rechtsanwälte mbB
Siebertstraße 3
81675 München (DE)**

(54) **ORDERING THE COEFFICIENTS OF A LOCAL ATTRIBUTE TRANSFORM FOR POINT CLOUD COMPRESSION**

(57) In an example point cloud decoding method, at least a portion of a bitstream is entropy decoded to obtain an ordered sequence of transform coefficients. The transform coefficients are arranged such that a first set of the transform coefficients for a first block in a point cloud is followed consecutively by a second set of the transform coefficients for a second block in the point cloud; the transform coefficients in the first set are arranged in order of increasing frequency; and the transform coefficients in the second set are arranged in order of decreasing frequency. The first and second blocks in the point cloud are reconstructed using the entropy decoded transform coefficients.

**FIG. 4C**

**EP 4 672 751 A1**

**Description**

**BACKGROUND**

Advances in 3D capturing and rendering technologies are enabling new applications and services in the fields of autonomous driving, cultural heritage archival, immersive telepresence and virtual/augmented reality. Point clouds have arisen as one of the main 3D scene representations for such applications. A point cloud frame consists of a set of 3D points, each point being represented with its 3D position and possibly several attributes such as color, transparency, reflectance, etc.

Standardization activity for point cloud compression is currently being carried out by the ISO/IEC JTC1/SC29/WG7 "MPEG 3D Graphics and Haptics Coding" group. An overview of these activities is provided in D. Graziosi et al., "An overview of ongoing point cloud compression standardization activities: video-based (V-PCC) and geometry-based (G-PCC)," APSIPA Transactions on Signal and Information Processing, Volume 9, Vol. 9, No. 1, e13, 2020. The Geometry-based Point Cloud Compression standard (G-PCC) standard is described as part 9 of the ISO/IEC 23090 series on the coded representation of immersive media, ISO/IEC 23090-9:2023.

Within the framework of G-PCC second edition in construction, the compression of dense dynamic point clouds is performed with a geometry-based approach (in the 3D space domain, without 3D-to-2D round trip to leverage existing 2D video codecs) has been identified as a separate target. The current G-PCC encoder for dense dynamic point clouds, so called GeS-TM [3], is described in "GeS-TM v4: User manual of Test Model v4 for Geometry-based Solid point cloud coding," ISO/IEC JTC1/SC29/WG7, 144th MPEG meeting, Hannover, Tech. Rep. N00750, Oct. 2023. It includes the following tools:

- pruned occupancy tree (octree) + triangle soups for geometry coding,

- Region-Adaptive Hierarchical Transform (RAHT) for color attribute coding,

- motion compensated inter-frame prediction, and

- context-adaptive arithmetic coding.

**SUMMARY**

A point cloud decoding method according to some embodiments comprises: entropy decoding at least a portion of a bitstream to obtain an ordered sequence of transform coefficients, wherein the transform coefficients are arranged such that: a first set of the transform coefficients for a first block in a point cloud is followed consecutively by a second set of the transform coefficients for a second block in the point cloud; the transform coefficients in the first set are arranged in order of increasing frequency; and the transform coefficients in the second set are arranged in order of decreasing frequency. The first and second blocks in the point cloud are reconstructed using the entropy decoded transform coefficients.

A point cloud decoding apparatus according to some embodiments comprises one or more processors configured to perform at least: entropy decoding at least a portion of a bitstream to obtain an ordered sequence of transform coefficients, wherein the transform coefficients are arranged such that: a first set of the transform coefficients for a first block in a point cloud is followed consecutively by a second set of the transform coefficients for a second block in the point cloud; the transform coefficients in the first set are arranged in order of increasing frequency; and the transform coefficients in the second set are arranged in order of decreasing frequency. The first and second blocks in the point cloud are reconstructed using the entropy decoded transform coefficients.

Some embodiments further include inverse transforming the first and second sets of the transform coefficients, wherein the first block in the point cloud is reconstructed using the inverse transformed first set and the second block in the point cloud is reconstructed using the inverse transformed second set.

In some embodiments, the inverse transformed first set comprises attributes of points in the first block and the inverse transformed second set comprises attributes of points in the second block.

In some embodiments, the inverse transformed first set comprises residuals of attributes of points in the first block and the inverse transformed second set comprises residuals of attributes of points in the second block.

In some embodiments, the ordered sequence of transform coefficients comprises a plurality of consecutive sets of transform coefficients including the first and second sets, and wherein each of a plurality of sets having transform coefficients arranged in order of increasing frequency is followed by a respective set of transform coefficients arranged in order of decreasing frequency.

In some embodiments, the sets of transform coefficients are ordered according to the number of coefficients in each set of coefficients.

In some embodiments, the transform coefficient are coefficients of a region-adaptive hierarchical transform (RAHT).

A point cloud encoding method according to some embodiments comprises: obtaining a plurality of transform coefficients including a first set of transform coefficients for encoding of a first block in a point cloud and a second set of transform coefficients for encoding of a second block in the point cloud; and entropy encoding the transform coefficients in the first and second sets in an order in which: the first set of transform coefficients is followed consecutively by the second set of transform coefficients; the first set of transform coefficients is arranged in order of increasing frequency; and the second set of transform coefficients is arranged in order of decreasing frequency.

A point cloud encoding apparatus according to some embodiments comprises one or more processors configured to perform at least: obtaining a plurality of transform coefficients including a first set of transform coefficients for encoding of a first block in a point cloud and a second set of transform coefficients for encoding of a second block in the point cloud; and entropy encoding the transform coefficients in the first and second sets in an order in which: the first set of transform coefficients is followed consecutively by the second set of transform coefficients; the first set of transform coefficients is arranged in order of increasing frequency; and the second set of transform coefficients is arranged in order of decreasing frequency.

In some embodiments, obtaining the first and second sets of transform coefficients comprises applying a transformation to attributes of points in the respective block.

In some embodiments, obtaining the first and second sets of transform coefficients comprises applying a transformation to residuals of attributes of points in the respective block.

In some embodiments, the plurality of transform coefficients comprises a plurality of sets of transform coefficients including the first and second sets, and wherein the entropy encoding is performed in an order in which each of a plurality of sets having transform coefficients encoded in order of increasing frequency is followed consecutively by a respective set of transform coefficients encoded in order of decreasing frequency.

In some embodiments, the sets of transform coefficients are encoded in an order according to the number of coefficients in each set of coefficients.

In some embodiments, the transform coefficient are coefficients of a region-adaptive hierarchical transform (RAHT).

**BRIEF DESCRIPTION OF THE DRAWINGS**

FIG. 1 is a schematic flow diagram illustrating an overview of an example point cloud encoding and decoding method.

FIG. 2 is a schematic illustration of a sparse one-dimensional array of attributes.

FIG. 3 is a schematic illustration of a tree structure used to encode the sparse one-dimensional array of attributes of FIG. 2 using a region adaptive hierarchical transform (RAHT).

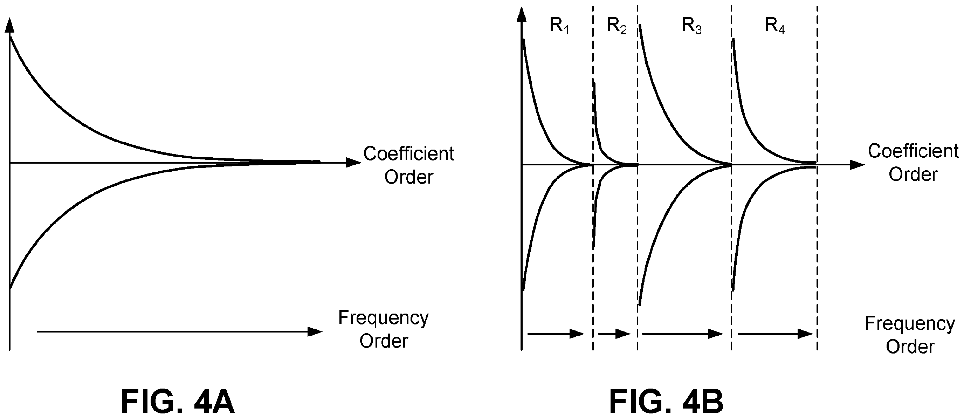

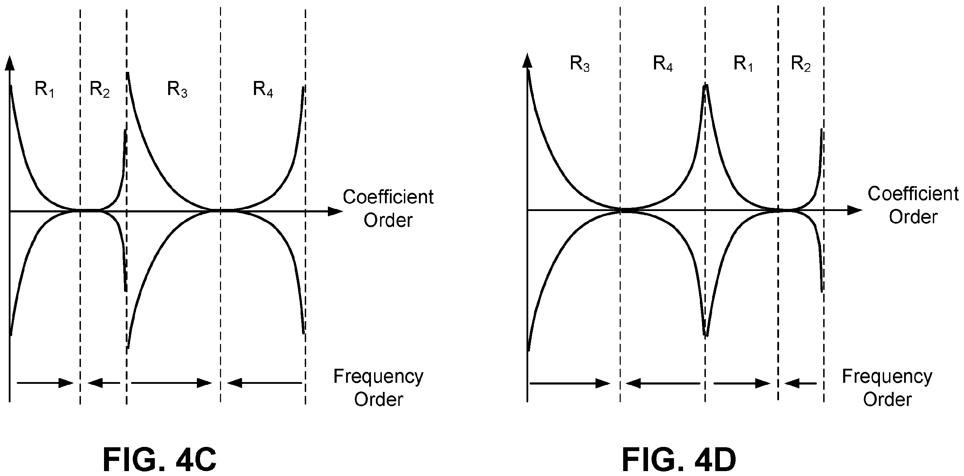

FIG. 4A-4D are graphs that schematically illustrate an envelope of transform coefficient amplitudes as a function of an ordering of coefficient frequencies. FIG. 4A, represents transform coefficients of a global encoding in which transform coefficients for each block are not encoded separately. FIG. 4B represents transform coefficients of a local encoding in which transform coefficients are encoded separately for each block, with the transform coefficients arranged by increasing frequency within each block. FIG. 4C represents transform coefficients of a local encoding in which transform coefficients are encoded separately for each block, with the transform coefficients arranged by increasing frequency within odd-numbered blocks and by decreasing frequency in even-numbered blocks. FIG. 4D represents transform coefficients of a local encoding in which transform coefficients are encoded separately for each block, with the blocks being arranged in order of a decreasing number of coefficients, with the transform coefficients arranged to alternate increasing frequency and decreasing frequency according to the arrangement.

FIG. 5 is a flow chart illustrating a point cloud decoding method according to some embodiments.

FIG. 6 is a flow chart illustrating a point cloud encoding method according to some embodiments.

FIG. 7 is a functional block diagram of an apparatus that may be used to implement the encoding and/or decoding methods described herein.

**DETAILED DESCRIPTION**

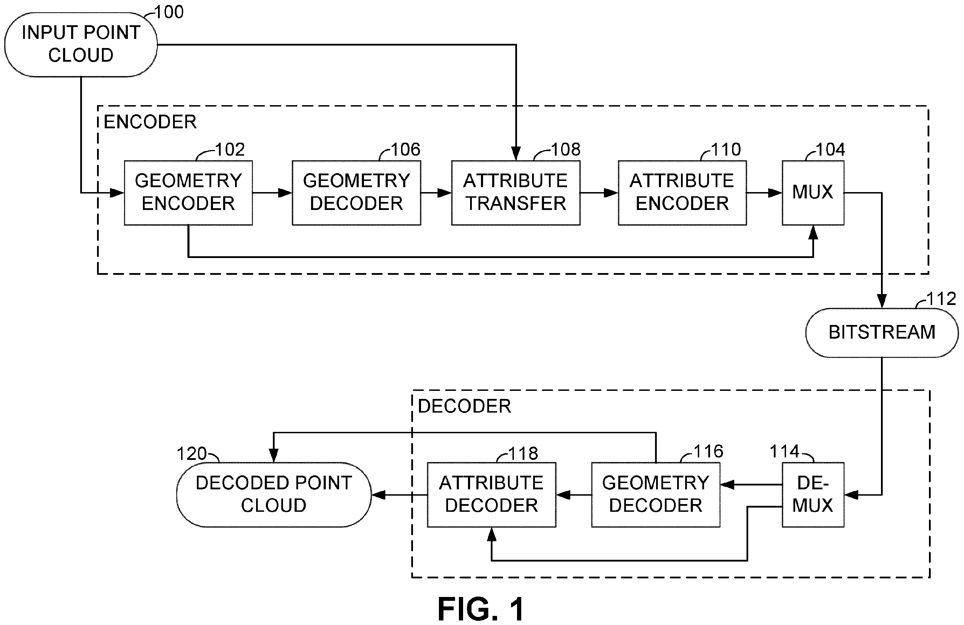

In an example of point cloud encoding and decoding, geometry and attributes are sequentially compressed, as illustrated in FIG. 1. The attributes may be colors, for example. More precisely, the geometry is first compressed, then input attributes are transferred onto the reconstructed geometry (after decompression) and compressed. Which means that at decoder side, the reconstructed geometry is available when decoding the attributes. As illustrated in FIG. 1, a geometry encoder 102 obtains an input point cloud 100. The encoded geometry is provided to a multiplexer 104 for encoding in a bitstream 112. The encoded geometry is also decoded at 106, so that the reconstructed geometry (i.e. the geometry that will be available to a decoder) can be used with attribute encoding. At 108, an attribute transfer process is performed to transfer the attributes of the input point cloud to the points of the reconstructed point cloud (which, in the case of lossy compression, will not necessarily be at the same positions as the input point cloud). The attributes of the reconstructed point cloud are encoded at 110, and the encoded attributes are provided to the demultiplexer for inclusion in the bitstream 112. At a decoder, the decoder obtains the bitstream. A demultiplexer 114 processes the bitstream and provides the encoded geometry to a geometry decoder 116. The demultiplexer also provides the encoded attributes to an attribute decoder 118. The attribute decoder 118 applies the decoded attributes to the reconstructed point cloud as provided by the geometry decoder 116, resulting in the decoded point cloud 120.

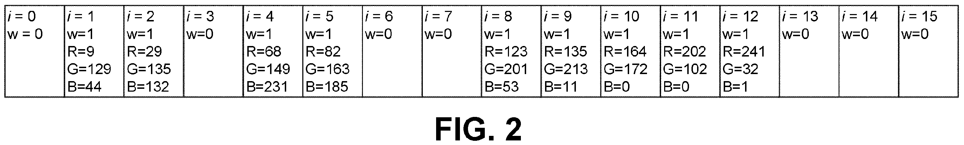

The region adaptive hierarchical transform (RAHT) is used to encode attributes distributed in a regular grid where the data is sparse. It is commonly used in the attribute encoder for point clouds to transform the attributes of sparse occupied voxels distributed in a 3D grid. The attributes can be, for example, the color, transparency, reflectance, normal, and the like. FIG. 2 is a 1D example, provided here for ease of representation, that can be extrapolated to any dimension, where the attribute may be, for example, the color of the pixel (voxel for 3D). Not all pixels are available, and are marked as void, meaning that they do not have an attribute associated to it. For example, the pixels labeled i = 0, 3, 6, 7, 13, 14, *and* 15 are void pixels.

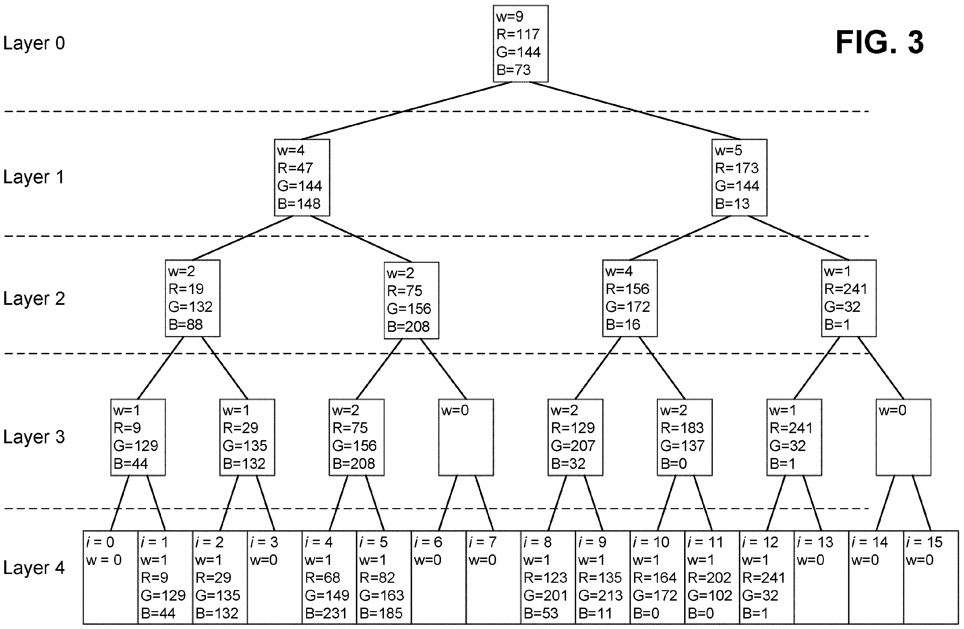

RAHT is a hierarchical transform, based on the wavelet Haar transform. In a conventional RAHT, data is firstly represented by a tree, as shown in FIG. 3, that is created based on the example shown in FIG. 2. At the highest layer (layer 4, in this example), every node represents the attribute of the pixel at the corresponding position. The nodes have a weight associated with them. At the highest layer, the weight is equal to 1 if the node corresponds to a non-void pixel and 0 otherwise.

Going from layer 4 to layer 3, nodes are combined 2 by 2 (in this one dimensional example). The attributes of the nodes at layer 3 are given by the weighted average of the nodes connected to it (using the weights of the nodes to compute the weighted average). Also, the weight of the nodes at layer 3 is given by the sum of weights of the nodes connected to it. The process is repeated until reaching the root node at layer 0, whose attribute is the average value of all non-void pixels attributes, and its weight is equal to the number of non-void pixels.

This process can be generalized to any dimension by indexing the attributes by their Morton code. The difference with the 1D example is that the nodes are combined k-times to go from one layer to another. The value of k may be based on the dimensionality, e.g. $k=2^d$, where d is the dimensionality. Thus, for a 3D space, an octree can be used, with eight nodes being combined at each layer into a weighted average at the next-lower layer. For a 2D space, a quadtree can be used, with four nodes being combined into each weighted average. For a 1D space, as shown in the example of FIG. 2 and FIG. 3, two nodes are combined into each weighted average. An octree decomposition may be used for 3D space, with groups of eight nodes being combined at each layer into a weighted average at the next-lower layer.

After constructing the tree, the transform is executed, that follows the tree starting at the root node, going layer per layer to the leaf nodes. The transform is orthonormal and equivalent to multiply the attributes of the child nodes of the current node that are being transformed,

$$A = \begin{bmatrix} a_1\sqrt{w_1} \\ a_2\sqrt{w_2} \\ \vdots \end{bmatrix},$$

where $a_i$ is the attribute of the i-th child node, by a matrix T that depends on the child nodes weights $w_1$, $w_2$, ..., resulting in transformed coefficients C that can be expressed as the result of a linear transformation T, such that:

$$C = TA.$$

The inverse transform is obtained by the inverse operation:

$$A = T^T C$$

Thus, the encoder transforms the attributes going through the tree, starting at the tree root. The coefficients are quantized and entropy encoded to the bitstream. The decoder also creates the tree structure but without attributes, and the decoding process also starts at the root node and follows the three the same way as the encoder. The decoder obtains the quantized coefficients from the bitstream and executes the inverse transform to obtain the nodes attributes. After the attributes of the leaf nodes have been processed, the encoding/decoding process is finished.

Example embodiments relate to the encoding and/or decoding (collectively "coding") of transformed coefficients C. The embodiments described herein are not necessarily restricted to the coding of transform coefficients obtained using RAHT but may also be applied to the coding of transform coefficients obtained using other techniques.

For real time applications it is desirable to divide an input point cloud into blocks and code the geometry and attribute in blocks that can be executed in parallel. For this, we define two types of coding:

- Global: where the encoder has access to the entire point cloud.

- Local: where the encoder is executed locally, in a block, with limited information about the entire point cloud.

The examples provided in this disclosure focus on the entropy coding of the coefficients of a local coding of attributes. When using an entropy encoder that learns how to model the coefficients as the coefficients are encoded, the order of the coefficients has an impact in the compression ratio. Example embodiments relate to the use of a point cloud coder that arranges an order of the coefficients to enhance the coding process.

Some embodiments operate to order the coefficients of the attribute encoder to obtain a better compression ratio when using an entropy coder that adapts itself as the coefficients are coded.

In an example embodiment, the encoding of the attributes starts by firstly transforming the attributes using some transform, such as the Region Adaptive Hierarchical Transform (RAHT), that operates to remove the redundancy between neighboring points. In some embodiments, the encoder may also use a prediction (intra or inter frame prediction) to produce coefficients with lower amplitude by just encoding a residue. The transform coefficients are quantized, and the quantized coefficients are entropy encoded. On the decoder side, an entropy decoder obtains the quantized coefficients that are dequantized and inverse transformed to obtain the reconstructed attributes, or the reconstructed residue that is added to a prediction to obtain the reconstructed attributes.

A global encoder has a better compression performance than a local encoder due to the amount of information available but is usually slower. However, the entropy encoder is usually faster than the transform and has some limitations to be executed in parallel. Therefore, the entropy encoding/decoding may be executed globally, even if the transform is executed locally. In this context, at encoder side, example embodiments first compute the quantized coefficients for all blocks for a given frame, and when finished the entropy encoding of the coefficients is performed globally. At the decoder side, example embodiments first globally decode the quantized coefficients and then reconstruct the attributes locally.

Example embodiments make use of coefficients of an attribute transform that are organized by an increasing order of frequency. As natural scenes have more components in low frequency, the amplitude of the coefficients demonstrates a decay, with lower coefficient magnitudes for greater frequencies. FIG. 4A is a graph schematically illustrating an envelope of coefficients produced by a transform applied globally. FIG. 4B is a graph schematically illustrating an envelope of coefficients when the transform is applied locally by blocks (four blocks in this example). The transformed quantized coefficients are then submitted to an entropy encoder, that is a lossless encoder that may employ several techniques to reduce the number of bits to encode.

One entropy encoding technique makes use of runs of zeros. As high pass coefficients tend to be zero after quantization, it is common to have long chains of zeros. Instead of individually encoding every zero coefficient, information is encoded indicating the number of zero coefficients that are chained.

Another entropy encoding technique makes use of adaptation to determine how to encode the coefficients. As the entropy encoder is lossless, it should be able to encode any value of coefficient that is possible. However, as the amplitudes of the coefficients tend to be bounded, the entropy encoder can use this information to encode with fewer bits the coefficients that are within the bound, and use previous coefficients to learn the bound, that evolves from one coefficient to another. In the example shown in FIG. 4A, the bound becomes more and more restrictive as we advance in the encoding of the coefficients.

A further entropy coding technique involves the adaptation of probabilities. The entropy encoder may model the probability for the quantized coefficient values and use this probability to improve the compression ratio by using less bits to encode values that are more probable. Starting from an initial probability, the encoder adapts its probabilities as coefficients are encoded.

Types of entropy coding that may be used in example embodiments include arithmetic coding such as context-adaptive binary arithmetic coding (CABAC), Run-Length Golomb-Rice (RLGR), Variable Length Code (VLC), Lempel-Ziv-Welch Coding (LZW), Huffman Coding, Elias Gamma Coding, or Tunstall Coding, among others.

These and other entropy coding techniques involve the coding of coefficients in a particular order. Typically, when the point cloud is divided into blocks, the envelope of the coefficients has an abrupt change when transitioning from the coefficients of one block to another, as shown in FIG. 4B. As the envelope is not smooth, this impairs the ability of the entropy coding tools to adapt when going from one block to another.

In an example embodiment, to improve the entropy coding of coefficients, the order of quantized coefficients is inverted every two blocks, as shown in FIG. 4C, where odd-numbered blocks ($R_1$ and $R_3$ in the example) will keep their order, while even blocks ($R_2$ and $R_4$ in the example) will have the order inverted. This allows for a smoother transition of the envelope.

In a further example embodiment, the blocks are sorted by size, e.g. by the number of coefficients, in descending or ascending order. The size of a block had been found to be related to the expected amplitude for the coefficients, so blocks with a similar number of coefficients are expected to have a similar envelope. In combination with the ordering of the blocks, the coefficients of every other block may be inverted, as shown in the example of FIG. 4D.

Example embodiments may improve the compression ratio for a point cloud coder that performs local operations, specifically for the entropy coding of transform coefficients.

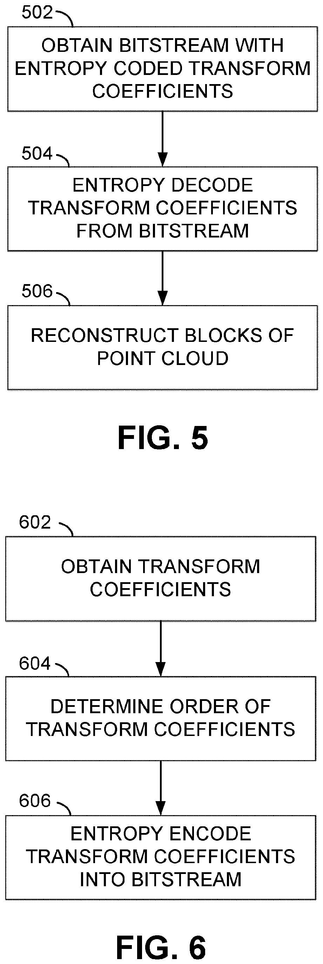

A point cloud decoding method according to some embodiments is illustrated in FIG. 5. At 502, a bitstream is obtained, the bitstream including entropy coded transform coefficients.

At 504, at least a portion of the bitstream is entropy decoded to obtain an ordered sequence of transform coefficients. The transform coefficients may be arranged such that: a first set of the transform coefficients for a first block in a point cloud is followed consecutively by a second set of the transform coefficients for a second block in the point cloud, the transform coefficients in the first set are arranged in order of increasing frequency, and the transform coefficients in the second set are arranged in order of decreasing frequency.

In some embodiments, the first (or first few) transform coefficients in the second set may be entropy coded using a context determined at least in part by the last (or last few) transform coefficients in the first set. Because the expected coefficient magnitudes are likely to remain relatively consistent (and relatively low) across this transition between the two sets, the compression efficiency is expected to be improved.

Similarly, a third set of transform coefficients for a third block of points may be arranged to follow the second set, with the transform coefficients in the third set being are arranged in order of decreasing frequency. The first (or first few) transform coefficients in the third set may be entropy coded using a context determined at least in part by the last (or last few) transform coefficients in the second set. Because the expected coefficient magnitudes are likely to remain relatively consistent (and relatively high) across this transition between the two sets, the compression efficiency is expected to be improved.

More generally, an arbitrary number of sets of transform coefficients may be decoded using alternating arrangements according to coefficient frequency. A plurality of consecutive sets of transform coefficients may be decoded including the first and second sets, with each of a plurality of sets having transform coefficients arranged in order of increasing frequency being followed by a respective set of transform coefficients arranged in order of decreasing frequency. Conversely, each of a plurality of sets having transform coefficients arranged in order of decreasing frequency is followed by a respective set of transform coefficients arranged in order of increasing frequency.

In some embodiments, for example when a multi-dimensional transform is used, each coefficient may be associated with more than one frequency. For example, with the use of a 2D transform such as a 2D discrete cosine transform, each coefficient may be associated with both a horizontal frequency (e.g. $f_x$) and a vertical frequency (e.g. $f_y$). In some such embodiments, for the purpose of arranging frequencies for entropy coding, a combined frequency may be used (e.g. sum, or weighted sum, of frequencies). For example, a coefficient may be associated with a combined frequency f, where $f = a \cdot f_x + b \cdot f_y$, where a and b are weight values. In example embodiments, the ordering of coefficients by increasing frequency is accomplished by ordering the coefficients by increasing combined frequency f. Weights with a=b correspond to a case in which coefficients are serialized in a zigzag path from the coefficient with the lowest values of $f_x$ and $f_y$ to the coefficient with the highest values of $f_x$ and $f_y$. Weights with a«b or a»b correspond different directions of raster scan, again from the coefficient with the lowest values of $f_x$ and $f_y$ to the coefficient with the highest values of $f_x$ and $f_y$. This use of combined frequency may also be extended to three or more frequency dimensions.

For purposes of the present disclosure, an ordering in which some but not all coefficients have the same frequency may nevertheless considered to be an ordering of coefficients by increasing frequency or by decreasing frequency.

At 506, the first and second blocks in the point cloud are reconstructed using the entropy decoded transform coefficients.

A point cloud decoding apparatus according to some embodiments comprises one or more processors configured to perform a decoding method as shown in FIG. 5.

Some embodiments further include inverse transforming the first and second sets of the transform coefficients, e.g. using an RAHT transform. The first block in the point cloud may be reconstructed using the inverse transformed first set and the second block in the point cloud may be reconstructed using the inverse transformed second set.

In some embodiments, the inverse transformed first set comprises attributes of points in the first block and the inverse transformed second set comprises attributes of points in the second block. The attributes may be, for example, one or more values representing color, transparency, reflectance, normal, or other attributes. In some embodiments, one or more position or displacement properties of the points may be coded using the techniques described herein.

In some embodiments, the inverse transformed first set comprises residuals of attributes of points in the first block and the inverse transformed second set comprises residuals of attributes of points in the second block. In such embodiments, the decoder may operate to generate a prediction of the attribute, e.g. using an inter prediction or an intra prediction, and reconstructing the points may include adding the residuals to the respective predicted attribute values.

In some embodiments, the sets of transform coefficients are ordered according to the number of coefficients in each set of coefficients. Such ordering may further improve the compression efficiency by increasing the consistency of the coding contexts across the transitions between different sets. In some such embodiments, additional information is decoded from the bitstream indicating the order of the blocks or otherwise indicating which sets of coefficients are encoded at which positions in the bitstream.

A point cloud encoding method according to some embodiments is illustrated in FIG. 6. At 602, a plurality of transform coefficients are obtained including a first set of transform coefficients for encoding of a first block in a point cloud and a second set of transform coefficients for encoding of a second block in the point cloud. At 604, an order for the encoding of the transform coefficients is determined. The order may be selected such that the first set of transform coefficients is followed consecutively by the second set of transform coefficients, the first set of transform coefficients is arranged in order of increasing frequency, and the second set of transform coefficients is arranged in order of decreasing frequency. At 606, the transform coefficients in the first and second sets are encoded according to the determined order.

A point cloud encoding apparatus according to some embodiments comprises one or more processors configured to perform a method as in FIG. 6.

In some embodiments, the first and second sets of transform coefficients are obtained by applying a transformation, such as an RAHT transformation, to attributes of points in the respective block. While example embodiments are described with reference to the RAHT transformation, the principles described herein may also be implemented using other transformations whose coefficients correspond to frequencies, including but not limited to a discrete cosine transform (DCT), discrete sine transform (DST), fast Fourier transform (FFT), wavelet transform, or Hadamard transform.

The first and second sets of transform coefficients are obtained by applying a transformation to residuals of attributes of points in the respective block. For example, the encoder may operate to generate a prediction of the attribute, e.g. using an inter prediction or an intra prediction, and the residuals may be determined by subtracting the predicted attribute values from respective input attribute values of points of an input point cloud being encoded.

In some embodiments, the sets of transform coefficients are encoded in an order according to the number of coefficients in each set of coefficients. In some such embodiments, additional information is encoded in the bitstream indicating the order of the blocks or otherwise indicating which sets of coefficients are encoded at which positions in the bitstream.

### Example system hardware.

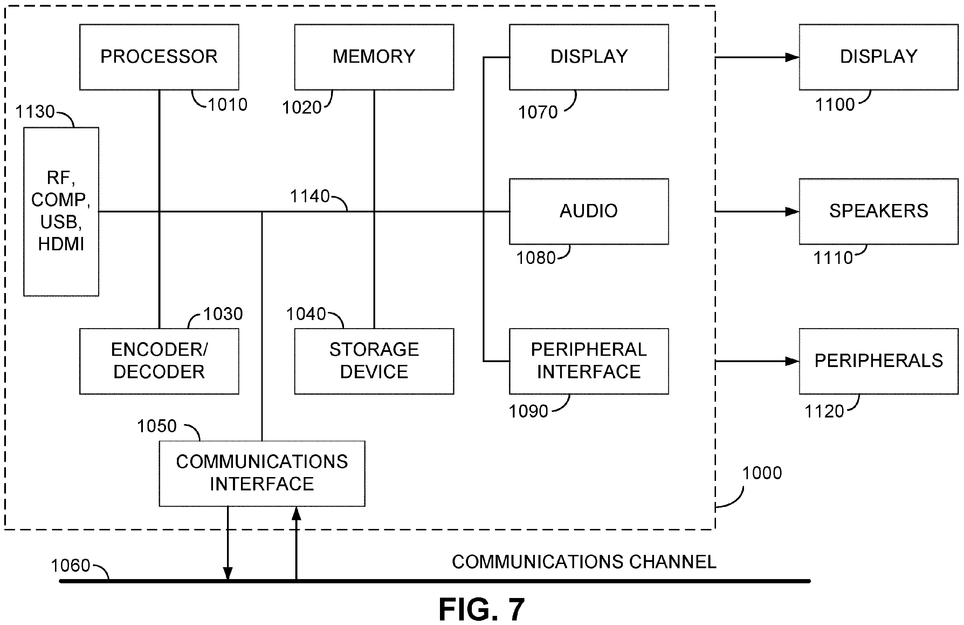

Example embodiments of encoders and/or decoders (collectively coders) configured to implement embodiments described herein may be implemented using systems such as the system of FIG. 7. FIG. 7 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded point cloud or decoded point cloud, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 7, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Additional embodiments.**

A point cloud decoding method according to some embodiments comprises: entropy decoding at least a portion of a bitstream to obtain an ordered sequence of transform coefficients, wherein the transform coefficients are arranged such that: a first set of the transform coefficients for a first block in a point cloud is followed consecutively by a second set of the transform coefficients for a second block in the point cloud; the transform coefficients in the first set are arranged in order of increasing frequency; and the transform coefficients in the second set are arranged in order of decreasing frequency. The first and second blocks in the point cloud are reconstructed using the entropy decoded transform coefficients.

A point cloud decoding apparatus according to some embodiments comprises one or more processors configured to perform at least: entropy decoding at least a portion of a bitstream to obtain an ordered sequence of transform coefficients, wherein the transform coefficients are arranged such that: a first set of the transform coefficients for a first block in a point cloud is followed consecutively by a second set of the transform coefficients for a second block in the point cloud; the transform coefficients in the first set are arranged in order of increasing frequency; and the transform coefficients in the second set are arranged in order of decreasing frequency. The first and second blocks in the point cloud are reconstructed using the entropy decoded transform coefficients.

Some embodiments further include inverse transforming the first and second sets of the transform coefficients, wherein the first block in the point cloud is reconstructed using the inverse transformed first set and the second block in the point cloud is reconstructed using the inverse transformed second set.

In some embodiments, the inverse transformed first set comprises attributes of points in the first block and the inverse transformed second set comprises attributes of points in the second block.

In some embodiments, the inverse transformed first set comprises residuals of attributes of points in the first block and the inverse transformed second set comprises residuals of attributes of points in the second block.

In some embodiments, the ordered sequence of transform coefficients comprises a plurality of consecutive sets of transform coefficients including the first and second sets, and wherein each of a plurality of sets having transform coefficients arranged in order of increasing frequency is followed by a respective set of transform coefficients arranged in order of decreasing frequency.

In some embodiments, the sets of transform coefficients are ordered according to the number of coefficients in each set of coefficients.

In some embodiments, the transform coefficient are coefficients of a region-adaptive hierarchical transform (RAHT).

A point cloud encoding method according to some embodiments comprises: obtaining a plurality of transform coefficients including a first set of transform coefficients for encoding of a first block in a point cloud and a second set of transform coefficients for encoding of a second block in the point cloud; and entropy encoding the transform coefficients in the first and second sets in an order in which: the first set of transform coefficients is followed consecutively by the second set of transform coefficients; the first set of transform coefficients is arranged in order of increasing frequency; and the second set of transform coefficients is arranged in order of decreasing frequency.

A point cloud encoding apparatus according to some embodiments comprises one or more processors configured to perform at least: obtaining a plurality of transform coefficients including a first set of transform coefficients for encoding of a first block in a point cloud and a second set of transform coefficients for encoding of a second block in the point cloud; and entropy encoding the transform coefficients in the first and second sets in an order in which: the first set of transform coefficients is followed consecutively by the second set of transform coefficients; the first set of transform coefficients is arranged in order of increasing frequency; and the second set of transform coefficients is arranged in order of decreasing frequency.

In some embodiments, obtaining the first and second sets of transform coefficients comprises applying a transformation to attributes of points in the respective block.

In some embodiments, obtaining the first and second sets of transform coefficients comprises applying a transformation to residuals of attributes of points in the respective block.

In some embodiments, the plurality of transform coefficients comprises a plurality of sets of transform coefficients including the first and second sets, and wherein the entropy encoding is performed in an order in which each of a plurality of sets having transform coefficients encoded in order of increasing frequency is followed consecutively by a respective set of transform coefficients encoded in order of decreasing frequency.

In some embodiments, the sets of transform coefficients are encoded in an order according to the number of coefficients in each set of coefficients.

In some embodiments, the transform coefficients are coefficients of a region-adaptive hierarchical transform (RAHT).

Some embodiments include a computer-readable medium, which may be a non-transitory medium, storing instructions for performing any of the methods described herein.

Some embodiments include a computer-readable medium, which may be a non-transitory medium, storing a point cloud encoded according to any of the methods described herein. For example, a stored encoded point cloud may include transform coefficients that are entropy encoded in an order as described herein.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to point cloud encoding and decoding, and at least one other aspect generally relates to transmitting a bitstream generated or encoded. These and other aspects can be implemented as a method, an apparatus, a computer readable storage medium having stored thereon instructions for encoding or decoding point cloud data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

A bitstream or signal that includes one or more of the described syntax elements, or variations thereof.

A bitstream or signal that includes syntax conveying information generated according to any of the embodiments described.

Creating and/or transmitting and/or receiving and/or decoding a bitstream or signal that includes one or more of the described syntax elements, or variations thereof.

Creating and/or transmitting and/or receiving and/or decoding according to any of the embodiments described.

A method, process, apparatus, medium storing instructions, medium storing data, or signal according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A point cloud decoding method comprising:

   entropy decoding at least a portion of a bitstream to obtain an ordered sequence of transform coefficients, wherein the transform coefficients are arranged such that:

   a first set of the transform coefficients for a first block in a point cloud is followed consecutively by a second set of the transform coefficients for a second block in the point cloud;
   the transform coefficients in the first set are arranged in order of increasing frequency; and
   the transform coefficients in the second set are arranged in order of decreasing frequency; and

   reconstructing the first and second blocks in the point cloud using the entropy decoded transform coefficients.

2. A point cloud decoding apparatus comprising one or more processors configured to perform at least:

   entropy decoding at least a portion of a bitstream to obtain an ordered sequence of transform coefficients, wherein the transform coefficients are arranged such that:

a first set of the transform coefficients for a first block in a point cloud is followed consecutively by a second set of the transform coefficients for a second block in the point cloud;

the transform coefficients in the first set are arranged in order of increasing frequency; and

the transform coefficients in the second set are arranged in order of decreasing frequency; and

reconstructing the first and second blocks in the point cloud using the entropy decoded transform coefficients.

3. The method of claim 1 or the apparatus of claim 2, further comprising:

inverse transforming the first and second sets of the transform coefficients;

wherein the first block in the point cloud is reconstructed using the inverse transformed first set and the second block in the point cloud is reconstructed using the inverse transformed second set.

4. The method of claim 3 as it depends from claim 1, or the apparatus of claim 3 as it depends from claim 2, wherein the inverse transformed first set comprises attributes of points in the first block and the inverse transformed second set comprises attributes of points in the second block.

5. The method of claim 3 as it depends from claim 1, or the apparatus of claim 3 as it depends from claim 2, wherein the inverse transformed first set comprises residuals of attributes of points in the first block and the inverse transformed second set comprises residuals of attributes of points in the second block.

6. The method of claim 1 or claims 3-5 as they depend from claim 1, or the apparatus of claim 2 or claims 3-5 as they depend from claim 2, wherein the ordered sequence of transform coefficients comprises a plurality of consecutive sets of transform coefficients including the first and second sets, and wherein each of a plurality of sets having transform coefficients arranged in order of increasing frequency is followed by a respective set of transform coefficients arranged in order of decreasing frequency.

7. The method of claim 1 or claims 3-6 as they depend from claim 1, or the apparatus of claim 2 or claims 3-6 as they depend from claim 2, wherein the sets of transform coefficients are ordered according to the number of coefficients in each set of coefficients.

8. The method of claim 1 or claims 3-7 as they depend from claim 1, or the apparatus of claim 2 or claims 3-7 as they depend from claim 2, wherein the transform coefficient are coefficients of a region-adaptive hierarchical transform (RAHT).

9. A point cloud encoding method comprising:

obtaining a plurality of transform coefficients including a first set of transform coefficients for encoding of a first block in a point cloud and a second set of transform coefficients for encoding of a second block in the point cloud; and entropy encoding the transform coefficients in the first and second sets in an order in which:

the first set of transform coefficients is followed consecutively by the second set of transform coefficients;

the first set of transform coefficients is arranged in order of increasing frequency; and

the second set of transform coefficients is arranged in order of decreasing frequency.

10. A point cloud encoding apparatus comprising one or more processors configured to perform at least:

obtaining a plurality of transform coefficients including a first set of transform coefficients for encoding of a first block in a point cloud and a second set of transform coefficients for encoding of a second block in the point cloud; and entropy encoding the transform coefficients in the first and second sets in an order in which:

the first set of transform coefficients is followed consecutively by the second set of transform coefficients;

the first set of transform coefficients is arranged in order of increasing frequency; and

the second set of transform coefficients is arranged in order of decreasing frequency.

11. The method of claim 9 or the apparatus of claim 10, wherein obtaining the first and second sets of transform coefficients comprises applying a transformation to attributes of points in the respective block.

12. The method of claim 9 or the apparatus of claim 10, wherein obtaining the first and second sets of transform coefficients comprises applying a transformation to residuals of attributes of points in the respective block.

13. The method of claim 9 or claims 11-12 as they depend from claim 9, or the apparatus of claim 10 or claims 11-12 as they depend from claim 10, wherein the plurality of transform coefficients comprises a plurality of sets of transform coefficients including the first and second sets, and wherein the entropy encoding is performed in an order in which each of a plurality of sets having transform coefficients encoded in order of increasing frequency is followed consecutively by a respective set of transform coefficients encoded in order of decreasing frequency.

14. The method of claim 9 or claims 11-13 as they depend from claim 9, or the apparatus of claim 10 or claims 11-13 as they depend from claim 10, wherein the sets of transform coefficients are encoded in an order according to the number of coefficients in each set of coefficients.

15. The method of claim 9 or claims 11-14 as they depend from claim 9, or the apparatus of claim 10 or claims 11-14 as they depend from claim 10, wherein the transform coefficient are coefficients of a region-adaptive hierarchical transform (RAHT).

**FIG. 1**

EP 4 672 751 A1

EP 4 672 751 A1

| i = 0 | i = 1 | i = 2 | i = 3 | i = 4 | i = 5 | i = 6 | i = 7 | i = 8 | i = 9 | i = 10 | i = 11 | i = 12 | i = 13 | i = 14 | i = 15 |
|---|---|---|---|---|---|---|---|---|---|---|---|---|---|---|---|
| w = 0 | w=1 | w=1 | w=0 | w=1 | w=1 | w=0 | w=0 | w=1 | w=1 | w=1 | w=1 | w=1 | w=0 | w=0 | w=0 |
| | R=9 | R=29 | | R=68 | R=82 | | | R=123 | R=135 | R=164 | R=202 | R=241 | | | |
| | G=129 | G=135 | | G=149 | G=163 | | | G=201 | G=213 | G=172 | G=102 | G=32 | | | |
| | B=44 | B=132 | | B=231 | B=185 | | | B=53 | B=11 | B=0 | B=0 | B=1 | | | |

## FIG. 2

FIG. 3

Layer 0

Layer 1

Layer 2

Layer 3

Layer 4

**FIG. 4A**

**FIG. 4B**

Coefficient
Order

R₂    R₁    R₄    R₃

Frequency
Order

**FIG. 4D**

Coefficient
Order

R₄    R₃    R₂    R₁

Frequency
Order

**FIG. 4C**

502
OBTAIN BITSTREAM WITH
ENTROPY CODED TRANSFORM
COEFFICIENTS

504
ENTROPY DECODE
TRANSFORM COEFFICIENTS
FROM BITSTREAM

506
RECONSTRUCT BLOCKS OF
POINT CLOUD

## FIG. 5

602
OBTAIN TRANSFORM
COEFFICIENTS

604
DETERMINE ORDER OF
TRANSFORM COEFFICIENTS

606
ENTROPY ENCODE
TRANSFORM COEFFICIENTS
INTO BITSTREAM

## FIG. 6

**FIG. 7**

EP 4 672 751 A1

| Europäisches Patentamt European Patent Office Office européen des brevets | **EUROPEAN SEARCH REPORT** | **Application Number** EP 24 30 6041 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI ZHANG ET AL: "[G-PCC][New] On RAHT coefficients ordering", 142. MPEG MEETING; 20230424 - 20230428; ANTALYA; (MOTION PICTURE EXPERT GROUP OR ISO/IEC JTC1/SC29/WG11), , no. m62975 19 April 2023 (2023-04-19), XP030309934, Retrieved from the Internet: URL:https://dms.mpeg.expert/doc_end_user/d ocuments/142_Antalya/wg11/m62975-v1-m62975 .zip m62975[G-PCC][New]On RAHT coefficients ordering.docx [retrieved on 2023-04-19] * the whole document * ----- | 1-15 | INV. H04N19/18 G06T9/00 H04N19/597 H04N19/96 H04N19/60 |
| X | Sandri Gustavo ET AL: "Comments on "Compression of 3D Point Clouds Using a Region-Adaptive Hierarchical Transform"", , 23 May 2018 (2018-05-23), XP093224766, Retrieved from the Internet: URL:https://arxiv.org/pdf/1805.09146 * the whole document * ----- | 1-15 | |
| A | DE QUEIROZ RICARDO L ET AL: "Compression of 3D Point Clouds Using a Region-Adaptive Hierarchical Transform", IEEE TRANSACTIONS ON IMAGE PROCESSING, IEEE, USA, vol. 25, no. 8, 1 August 2016 (2016-08-01) , pages 3947-3956, XP011615540, ISSN: 1057-7149, DOI: 10.1109/TIP.2016.2575005 [retrieved on 2016-06-29] * the whole document * ----- -/-- | 1-15 | **TECHNICAL FIELDS SEARCHED** (IPC) H04N G06T |

The present search report has been drawn up for all claims

| Place of search | Date of completion of the search | Examiner |
|---|---|---|
| Munich | 18 November 2024 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 24 30 6041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "G-PCC Test Model v21", 141. MPEG MEETING; 20230116 - 20230120; ONLINE; (MOTION PICTURE EXPERT GROUP OR ISO/IEC JTC1/SC29/WG11), , no. n22417 16 April 2023 (2023-04-16), XP030308574, Retrieved from the Internet: URL:https://dms.mpeg.expert/doc_end_user/documents/141_OnLine/wg11/MDS22417_WG07_N00502.zip MDS22417_WG07_N00502.pdf [retrieved on 2023-04-16] * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 18 November 2024 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- MPEG 3D Graphics and Haptics Coding. *ISO/IEC JTC1/SC29/WG7*
- **D. GRAZIOSI et al.** An overview of ongoing point cloud compression standardization activities: video-based (V-PCC) and geometry-based (G-PCC). *APSIPA Transactions on Signal and Information Processing*, 2020, vol. 9 (1), e13

- GeS-TM v4: User manual of Test Model v4 for Geometry-based Solid point cloud coding. *ISO/IEC JTC1/SC29/WG7, 144th MPEG meeting, Hannover, Tech. Rep. N00750*, October 2023